# EUROPÄISCHE PATENTANMELDUNG

(11) **EP 0 952 365 A1**
(43) Veröffentlichungstag der Anmeldung: **27.10.1999**
(21) Anmeldenummer: 98107289.5
(22) Anmeldetag: 22.04.1998
(51) Int. Cl.: F16D 3/50, F16D 3/74

(54) **Elastische Wellenkupplung, insbes. hochdrehelastische Vorschaltkupplung für Kardanwellen**

(71) Anmelder: CENTA-ANTRIEBE KIRSCHEY GmbH, D-42781 Haan (DE)
(72) Erfinder: Arnott, Robert, Silsden, Keighley BD20 9HS (GB)
(74) Vertreter: Patentanwälte Ostriga & Sonnet

(57) **Zusammenfassung**

Bei einer Wellenkupplung (10), insbesondere hochdrehelastischen Vorschaltkupplung für Kardanwellen, mit einem hochelastischen Kupplungselement (13) zwischen der mit dem Antriebsaggregat wie Motorschwungrad zu verbindenden Antriebsseite (11) und der mit einer Welle zu verbindenden Abtriebsseite (12) der Kupplung, wobei in einem Ringspalt zwischen in einem axialen Bereich (22) einander übergreifender Antriebsseite (11) und Abtriebsseite (12) der Kupplung (10) ein ringförmiges Zentrierlager (23) angeordnet ist, sieht die Erfindung vor, statt eines starren Zentrierlagers (23) ein zwischen Anschlußstücken befestigtes gummielastischen Element zu verwenden, insbes. eine Gummi-Metall-Buchse (25), wobei die Anschlußstücke mit der Antriebsseite (11) bzw. der Abtriebsseite (12) der Kupplung (10) drehfest verbunden sind. Eine erhebliche Verschleißminderung des Zentrierlagers (23) resultiert daraus, daß zwischen ihm und den angrenzenden Kupplungsseiten (11 und 12) bei deren oszillierender Umfangsbewegung keine verschleißfördernden Reibungskräfte übertragen werden können, weil die relativen Verdrehungen zwischen Antriebs- und Abtriebsseite vollständig von dem gummielastischen Körper aufgenommen werden können.

## Beschreibung

Die Erfindung betrifft eine elastische Wellenkupplung, insbesondere eine hochdrehelastische Vorschaltkupplung für Kardanwellen nach dem Oberbegriff des Anspruchs 1.

Bei der Leistungsübertragung von Motoren, insbesondere Dieselmotoren, auf Wellen, namentlich Kardanwellen, stellen sich besondere Probleme, was nachfolgend erläutert werden soll:

Da jeder Dieselmotor Drehschwingungen erzeugt, und jede Kardanwelle eine gewisse Drehelastizität besitzt, ergibt sich zusammen mit der angetriebenen Maschine ein drehschwingungsfähiges System. Dabei ergibt sich oft aufgrund der gegebenen Voraussetzungen im Betriebsbereich eine Resonanzdrehzahl. Dann ist mit erheblichen Problemen wie Geräuschen und der Zerstörung von Teilen des Antriebsstranges zu rechnen, zumal in einem solchen Antriebsstrang die Kardanwelle in ihrer Wirkung als Stahlfeder fast ohne Dämpfung wirkt, und somit in Resonanz eine extreme Vergrößerung der vom Motor angefachten Drehschwingung erfolgt.

Dieses Problem kann durch die richtige Anordnung einer hochelastischen Vorschaltkupplung gelöst werden. Eine solche Vorschaltkupplung hat für den Antrieb zwei Vorteile:
1.) Die Gesamtdrehzahlelastizität aus Vorschaltkupplung und Kardanwelle wird so hoch, daß die gefährlichen Resonanzen auf niedrige Drehzahlen unterhalb des Arbeitsbereiches verschoben werden.
2.) Die elastische Vorschaltkupplung besitzt eine hohe Dämpfung, so daß auch bei geringer Resonanzentfernung die Wechseldrehmomente auf ein zulässiges Maß gedämpft werden, und daß vor allem beim Durchfahren der Resonanzen beim Hochlaufen des Motors keine unzulässig hohen Wechseldrehmomente auftreten.

Die Centax®-Kupplungen der Baureihe V der Anmelderin als Vorschaltkupplungen weisen alle diese positiven Eigenschaften auf. Der Kraftfluß geht üblicherweise vom Motorschwungrad über einen Flansch auf das hochelastische Gummielement und von dort auf die innere Nabe, woran die Kardanwelle angeflanscht wird. An- und Abtriebsseite sind durch ein radiales Gleitlager exakt zentriert, so daß guter Rundlauf gegeben ist. Das Gummielement kann außerdem in axialer Richtung vorgespannt sein, wobei diese Vorspannung durch die Verschraubung an der inneren Nabe aufgebracht und über ein axiales Gleitlager aufgefangen wird. Solche Gleitlager bestehen z.B. aus verschleißfesten Asbestersatzstoffen, z.B. Mineralfasergeweben, in Form einer Hülse beim radialen Gleitlager oder einer Ringscheibe beim Axialgleitlager.

Derartige Wellenkupplungen, insbesondere Vorschaltkupplungen dieser Art, haben sich außerordentlich bewährt. Bislang ließ es sich allerdings kaum vermeiden, insbesondere das radiale Gleitlager aufgrund seines Verschleißverhaltens nach gewissen Betriebszeiträumen austauschen zu müssen.

Es ist daher die vordringliche Aufgabe der Erfindung, die Reparaturintervalle einer elastischen Wellenkupplung nennenswert zu verlängern. Insbesondere ist es Aufgabe der Erfindung, das radiale Gleitlager als Zentrierlager des Kupplungssystems hinsichtlich seines Verschleißverhaltens zu optimieren. Bisherige Versuche in diesem Zusammenhang, das bekannte Radialgleitlager durch ein Wälzlager zu ersetzen, waren insbesondere deshalb nicht erfolgreich, weil Wälzlager unter Dauerbelastungen der hier in Rede stehenden Art, also bei lediglich um kleine Winkel (< 5°) oszillierende Bewegungen zu örtlichen Verformungen tendieren, die einen raschen Verschleiß fördern.

Die Erfindung löst das geschilderte Problem mit den Merkmalen des Anspruchs 1 und ist dementsprechend dadurch gekennzeichnet, daß das Zentrierlager von wenigstens einem gummielastischen Körper in Ringform oder -anordhung ausgebildet ist, an dessen Innenseite ein inneres Anschlußstück und an dessen Außenseite ein äußeres Anschlußstück befestigt ist, von denen das eine an der Antriebsseite und das andere an der Abtriebsseite der Kupplung jeweils drehfest angeschlossen ist.

Die Erfindung zeichnet sich demnach insbesondere dadurch aus, daß sie das als radiales Gleitlager ausgebildete starre Zentrierlager des Standes der Technik durch ein gummielastisches Element ersetzt, das - über Anschlußstücke - drehfest und daher reibflächenfrei mit den Kupplungsseiten verbunden ist. Relative Verdrehungen zwischen der Antriebsseite und der Abtriebsseite der Kupplung im Anordhungsbereich des Zentrierlagers werden dabei allein von dem gummielastischen Körper aufgenommen.

Nach einem bevorzugten Ausführungsbeispiel der Erfindung ist vorgesehen, daß das Zentrierlager ausgebildet ist von einer an sich bekannten Gummi-Metall-Buchse mit wenigstens einem gummielastischen Ringkörper zwischen konzentrischen Metallringen als dem äußeren und inneren Anschlußtück, an die er durch Vulkanisation angehaftet ist, und daß die Gummi-Metall-Buchse derart in den Ringspalt zwischen Antriebsseite und Abtriebsseite der Kupplung eingepaßt ist, daß relative Verdrehungen zwischen Antriebsseite und Abtriebsseite der Kupplung im Anordnungsbereich des Zentrierlagers allein von dem gummielastischen Körper aufgenommen werden.

Hiermit verwendet die Erfindung eine an sich bekannte Gummi-Metall-Buchse ('Gummifeder') in neuartiger Weise als Ersatz für ein Gleit- oder Wälz-Zentrierlager, wobei sie sich - für den neuartigen Zweck der Zentrierlagerung - in geschickter Weise die Eignung des bekannten Elements zunutze macht, oszillierende Drehbewegungen zwischen innerem und äußerem Ring allein im Gummielement aufzunehmen. Daraus resultiert, daß das Zentrierlager entsprechend der Erfindung - abgesehen von innerer Reibung im gummielastischen Körper - und auch die angrenzenden Kupplungselementflächen keinen verschleißbehafteten Reibungskräften ausgesetzt sind mit der Folge einer erblichen Steigerung der Standzeit des radialen Zentrierlagers und somit des gesamten Kupplungssystems.

Wenn entsprechend weiterer erfindungsgemäßer Ausgestaltung der gummielastische Ringkörper zwischen den Metallringen unter radialer Vorspannung steht, ergeben sich aufgrund der dadurch größeren Federsteife des gummielastischen Elements eine höhere Tragfähigkeit sowie eine noch weiter verbesserte Eignung zur Zentrierung der Kupplungsseiten.

Gummi-Metall-Buchsen (mit oder ohne radiale Vorspannung des elastischen Elements) sind im allgemeinen Maschinenbau auch als 'Gummifedern' bekannt und dienen in ihrer Bauform als 'Drehschubfedern' z.B. zur Dämpfung von Drehschwingungen kleiner Amplituden. Der Erfindung geht es nun darum, eine solche, an sich bekannte Gummi- oder Drehschubfeder nicht zur Schwingungsdämpfung heranzuziehen, sondern als Zentrierlager, um die beiden Kupplungsseiten bezüglich ihres gemeinsamen Rundlaufs optimal ausgerichtet zu halten. Denn bei einer Kupplung der vorausgesetzten Art dient selbstverständlich das hochelastische Kupplungselement der Leistungsübertragung und Schwingungsdämpfung, wohingegen das Zentrierlager weder an der Leistungsübertragung noch an der Schwingungsdämpfung nennenswerten Anteil hat.

Im Rahmen der Erfindung ist es des weiteren vorteilhaft, wenn das Zentrierlager auf einem erheblich kleineren Kupplungsdurchmesser als das hochelastische Kupplungselement angeordnet ist. Dies garantiert, daß - ganz im Sinne des Bestrebens zur Verschleißminderung - selbst relativ klein bauende und somit preiswerte Zentrierlager verwendet werden können, da aufgrund der relativen Nähe zur Kupplungsachse die Umfangsstrecken der oszillierende Verdrehungen sehr klein sind.

Das Zentrierlager kann auch platzsparend innerhalb des axialen Überdeckungsbereichs des hochelastischen Kupplungselements angeordnet sein.

Weitere Merkmale und vorteilhafte Ausgestaltungen der Erfindung ergeben sich aus der nachfolgenden Beschreibung der Erfindung anhand von in den Zeichnungen dargestellten Ausführungsbeispielen. Es zeigen:
- Fig. 1: einen Halblängsschnitt durch eine Wellenkupplung entsprechend der Erfindung mit einem zwei konzentrische gummielastische Ringe und drei Metallringe aufweisenden Zentrierlager,
- Fig. 2: eine der Fig. 1 entsprechende Darstellung einer Kupplung mit einem aus einem gummielastischen Ring und zwei konzentrischen Metallringen bestehenden Zentrierlager, und
- Fig. 3: eine entsprechende Darstellung einer zum Stand der Technik zählenden Kupplung.

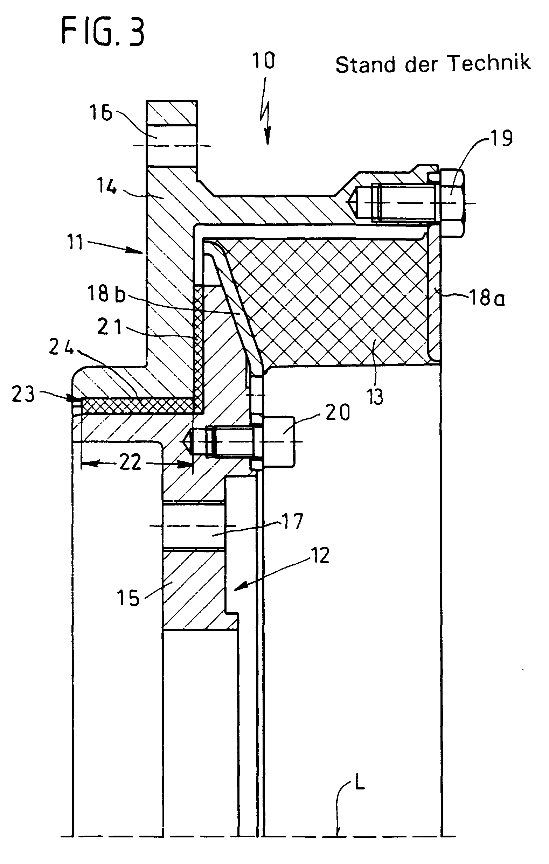

Bevor die Erfindung im einzelnen anhand zweier charakteristischer Ausführungsbeispiele beschrieben wird, sei zunächst anhand der Fig. 3 der Stand der Technik, von dem die Erfindung ausgeht, kurz dargestelllt:

Die insgesamt mit 10 bezeichnete Wellenkupplung weist eine Antriebsseite 11 und eine Abtriebsseite 12 auf, die mittels eines ringförmigen hochelastischen Gummielements 13 miteinander verbunden sind.

Die Antriebsseite 11 besteht im wesentlichen aus einem Kupplungsflansch 14 zum Anschluß an ein Antriebsaggregat, insbesondere ein Motorschwungrad, wozu die mit 16 bezeichneten Schraubendurchgriffsöffnungen dienen. Die Abtriebsseite 12 ist von einem Nabenbauteil 15 gebildet, welches über Gewindebohrungen 17 an eine Welle, insbesondere Kardanwelle angeschlossen wird.

Die in Axialrichtung bzw. im wesentlichen in Axialrichtung weisenden umlaufenden Stirnflächen des gummielastischen Körpers 13 sind an metallische Ringscheiben 18a und 18b anvulkanisiert. Wie aus Fig. 3 ersichtlich, ist die Ringscheibe 18a über Verschraubungen 19 mit der Antriebsseite 11 der Kupplung fest verbunden und die Ringscheibe 18b mittels einer Verschraubung 20 mit der Abtriebsseite 12.

Das drehelastische Gummielement 13 ist in axialer Richtung der Kupplung 10 vorgespannt. Diese Vorspannung wird durch die Verschraubung 19 aufgebracht und mittels eines ringscheibenförmigen Axiallagers 21, welches sich in einem Ringspalt zwischen dem Kupplungsflansch 14 und einem an der Nabe 15 befindlichen Flansch liegt. Bei Drehschwingung, d.h. bei relativer Verdrehung von Antriebsseite 11 der Kupplung 10 zur Abtriebsseite 12 tritt gleichzeitig auch eine Relativbewegung zwischen diesen Kupplungsseiten am axialen Gleitlager 21 auf und damit eine beträchtliche zusätzliche Reibungsdämpfung.

Des weiteren ist innerhalb eines Bereichs 22, in dem sich die Kupplungs-Antriebsseite 11 und die Kupplungs-Abtriebsseite 12 in Axialrichtung übergreifen, ein Zentrierlager 23 angeordnet. Bei diesem Zentrierlager 23 handelt es sich um eine Hülse bzw. um einen rohrförmigen Abschnitt eines im wesentlichen starren, abriebfesten Gleitlagermaterials, insbesondere eines Asbestersatzstoffes. Das Zentrierlager 23 hat insbesondere die Aufgabe, die Kupplungs-Antriebsseite 11 und die Kupplungs-Abtriebseite 12 zur Erzielung eines einwandfreien Rundlaufs kippsicher gegeneinander zu halten, so daß ihre Längsachsen im wesentlichen optimal mit der Längsachse L des Kupplungssystems übereinstimmen.

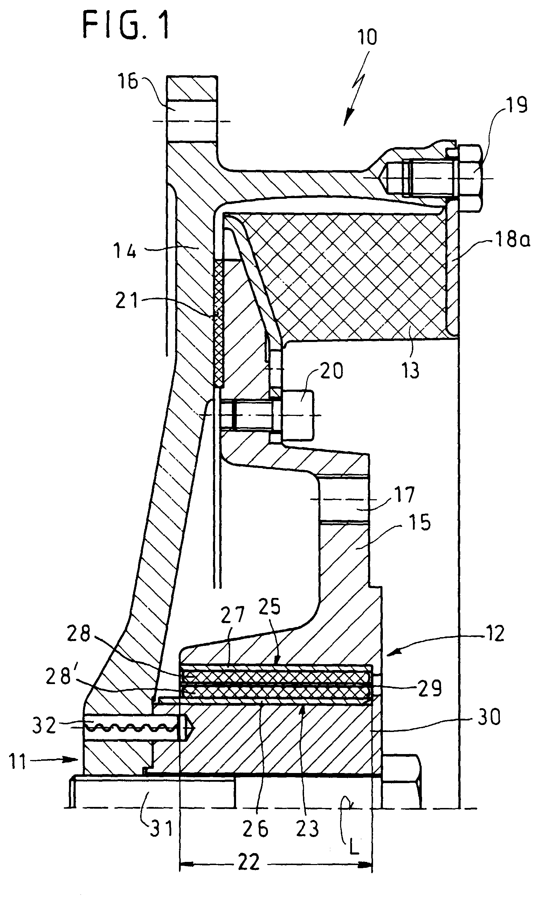

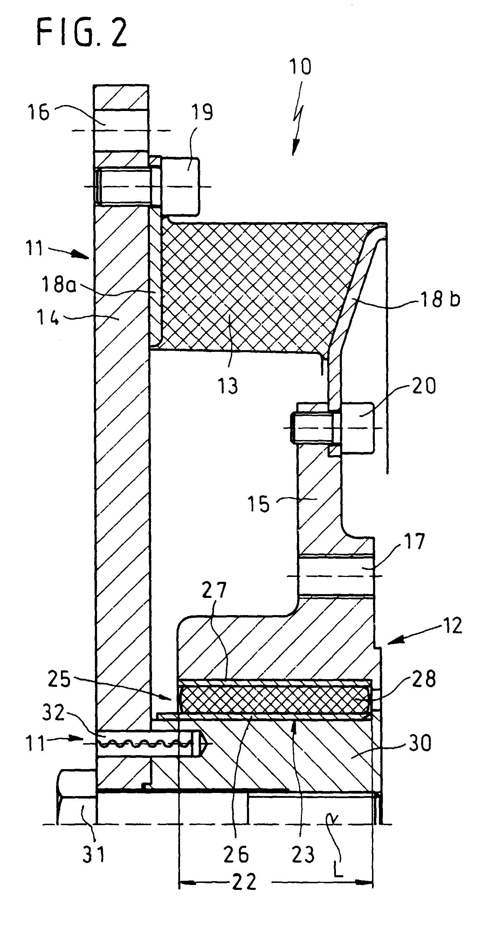

Da sich im Betriebszustand der Kupplung 10 oszillierende Bewegungen zwischen der Kupplungs-Antriebsseite 11 und der Kupplungs-Abtriebsseite 12 einstellen, unterliegen sowohl das Axiallager 21 als auch das Radiallager 23 reibender und somit verschleißbehafteter Abnutzung. Wie die Praxis gezeigt hat, ist die Abnutzung des Radialgleitlagers 23 im Vergleich zu der des Axialgleitlagers 21 höher, woraus der Wunsch resultiert, die Standzeit des Zentrierlagers 23 einer solchen Kupplung 10 zu erhöhen. Dem dient die vorliegende Erfindung, die nunmehr anhand der Fig. 1 und 2 beschrieben wird.

Die in Fig. 1 dargestellte Ausführungsform ähnelt derjenigen, die anhand des Standes der Technik entsprechend Fig. 3 beschrieben wurde. Gleiche oder gleich wirkende Bauelemente sind deshalb auch mit denselben Bezugszeichen versehen.

Der wesentliche Unterschied besteht darin, daß das Zentrierlager 23 nicht als reibverschleißbehaftetes Radialgleitlager ausgebildet ist, sondern durch eine Gummi-Metall-Buchse, welche in ihrer Gesamtheit mit 25 bezeichnet ist. Die Gummi-Metall-Buchse 25 besteht im wesentlichen aus einem inneren Metallring 26 und aus einem äußeren Metallring 27 sowie mindestens einem dazwischen angeordneten Gummiring 28, der mit seinen radial nach innen bzw. außen weisenden Flächen mit den Metallringen 26 und 27 in konzentrischer Zuordnung durch Vulkanisation verbunden ist.

Bei dem in Fig. 1 dargestellten Beispiel ist eine zweischichtige Anordnung gewählt worden mit zwei Gummiringkörpern 28 und 28', wobei zwischen diesen noch ein weiterer Metallring 29 konzentrisch angeordnet ist. Das äußere Ringelement 28 ist auf der Außenfläche des Zwischenrings 29 und das Gummielement 28' auf dessen Innenseite anvulkanisiert. Diese zweischichtige Anordnung bildet ein besonders hochbelastbares Zentrierlager 23 aus.

Wesentlich ist, daß die Gummi-Ringkörper 28 und 28' unter radialer Vorspannung zwischen der Antriebsseite 11 und der Abtriebsseite 12 der Kupplung eingebaut sind und daß im übrigen die metallischen Ringe 26 und 27 derart in den nicht bezeichneten Spalt zwischen der Antriebsseite 11 und der Abtriebsseite 12 eingepaßt sind, daß die oszillierenden Winkelbewegungen, die zwischen den Kupplungsseiten 11 und 12 auftreten, lediglich in den Gummikörpern 28 und 28' aufgenommen werden, daß aber keine Relativbewegung zwischen dem Metallring 26 und der Antriebsseite 11 sowie dem Metallring 27 und der Abtriebsseite 12 der Kupplung 10 übertragen werden. Die feste Einpassung der Gummi-Element-Buchse 25 wird beim Ausführungsbeispiel durch Einpressen zwischen die Kupplungsseiten 11 und 12 erreicht. Denkbar sind auch andere kraftschlüssige Verbindungen, z.B. mittels Kleben oder formschlüssig wirkende Verbindungsmittel zwischen den Metallringen 26, 27 und den daran angrenzenden Kupplungsseiten 11 und 12.

Von der Ausführung nach Fig. 1 unterscheidet sich die in Fig. 2 dargestellte zweite Verkörperung der Erfindung zum einen darin, daß das Zentrierlager 23 lediglich einen gummielastischen Ringkörper 28 umfaßt, an dessen Innenumfang ein innerer Metallring 26 und an seinem Außenumfang ein äußerer Metallring 27 anvulkanisiert ist. Ein anderer Unterschied besteht darin, daß bei der Ausführung nach Fig. 2 kein Axialgleitlager (21 in Fig. 1) vorgesehen ist. Damit handelt es sich bei der in Fig. 2 dargestellten Kupplung gegenüber der nach Fig. 1 um eine in gewisser Hinsicht vereinfachte Ausführung für nicht derart hohe Ansprüche, wie sie die konstruktive Lösung nach Fig. 1 beherrschen kann.

Der Vollständigkeit halber ist darauf hinzuweisen, daß das mit 30 angegebene Bauteil über eine mit 31 bezeichnete Verschraubung mit dem Kupplungsflansch 14 fest verbunden ist, wobei diese feste Verbindung noch durch axial gerichtete Stifte auch formschlüssig gesichert ist. Mit Hilfe des Bauteils 30 läßt sich der Antriebsflansch 14 der Kupplung einfacher gestalten als für den Fall, daß er mitsamt der räumlichen Konfiguration des jeweiligen Bauelementes 30 aus einem einteiligen Werkstück bestehen würde.

Wie aus Vorstehendem deutlich geworden ist, hat die Erfindung im Prinzip ein reibverschleißbehaftetes Zentrierlager 23, nämlich das Radialgleitlager 24 des Standes der Technik (Fig. 3), durch eine fest zwischen Antriebsseite 11 und Abtriebsseite 12 der Kupplung 10 eingebautes Gummi-Metall-Buchse 25 ersetzt, deren gummielastischer Körper 28 bzw. deren gummielastische Körper 28 und 28', die die sich aus einer Oszillation zwischen der Antriebsseite 11 und der Abtriebsseite 12 resultierenden Relativbewegungen um die Kupplungssystemachse L aufgrund der Elastizität der betreffenden Gummielemente 28 bzw. 28' allein ausgleichen können. Als an sich bekannte "Gummifeder" wird die Gummi-Metall-Buchse 25 also in gewisser Weise zweckentfremdet eingesetzt, wobei es sich die Erfindung zunutze macht, daß ein axial vorgespanntes ringförmiges Gummielement 28 Umfangsbewegungen zwischen seinem metallischen Innenring 26 und seinem metallischen Außenring 27 verschleißfrei erlaubt.

Wie aus den Fig. 1 und 2 weiterhin ersichtlich, sind bei beiden Ausführungen die Zentrierlager 23 möglichst nahe an der Kupplungslängsachse L angeordnet, damit die aus der oszillierenden Relativbewegung zwischen der Kupplungs-Antriebsseite 11 und der Kupplungs-Abtriebsseite 12 resultierenden Bewegungen im Gummielement möglichst klein bleiben.

Die Zentrierlager 23 dienen nicht zur Schwingungsdämpfung und haben daran auch keinen nennenswerten Anteil. Die Erfüllung dieser Aufgabe obliegt dem ringförmigen, hochelastischen Gummielement 13 der jeweiligen Kupplung 10.

## Patentansprüche

1. Elastische Wellenkupplung (10), insbesondere hochdrehelastische Vorschaltkupplung für Kardanwellen, mit einem hochelastischen Kupplungselement (13) zwischen der mit dem Antriebsaggregat wie Motorschwungrad zu verbindenden Antriebsseite (11) und der mit einer Welle zu verbindenden Abtriebsseite (12) der Kupplung (10), wobei in einem Ringspalt zwischen in einem axialen Bereich (22) einander Antriebsseite (11) und Abtriebsseite (12) der Kupplung (10) ein ringförmiges Zentrierlager (23) angeordnet ist, dadurch gekennzeichnet, daß das Zentrierlager (23) von wenigstens einem gummielastischen Körper (28; 28') in Ringform oder -anordnung ausgebildet ist, an dessen Innenseite ein inneres Anschlußstück (26) und an dessen Außenseite ein äußeres Anschlußstück (27) befestigt ist, von denen das eine an der Antriebsseite (11) und das andere an der Abtriebsseite (12) der Kupplung (10) jeweils drehfest angeschlossen ist.

2. Wellenkupplung nach Anspruch 1, dadurch gekennzeichnet, daß das Zentrierlager (23) ausgebildet ist von einer an sich bekannten Gummi-Metall-Buchse (25) mit wenigstens einem gummielastischen Ringkörper (28; 28') zwischen konzentrischen Metallringen (26, 27) als dem äußeren und inneren Anschlußtück, an die er durch Vulkanisation angehaftet ist, und daß die Gummi-Metall-Buchse (25) derart in den Ringspalt zwischen Antriebsseite (11) und Abtriebsseite (12) der Kupplung (10) eingepaßt ist, daß relative Verdrehungen zwischen Antriebsseite (11) und Abtriebsseite (12) der Kupplung (10) im Anordnungsbereich des Zentrierlagers (23) allein von dem gummielastischen Körper (28; 28') aufgenommen werden.

3. Wellenkupplung nach Anspruch 1, dadurch gekennzeichnet, daß der gummielastische Ringkörper (28; 28') zwischen den Metallringen (26, 27) unter radialer Vorspannung steht.

4. Wellenkupplung nach Anspruch 1, dadurch gekennzeichnet, daß das Zentrierlager (23) auf einem erheblich kleineren Kupplungsdurchmesser als das hochelastische Kupplungselement (13) angeordnet ist.

5. Wellenkupplung nach Anspruch 1 oder 2, dadurch gekennzeichnet, daß das Zentrierlager (23) im wesentlichen innerhalb des axialen Überdeckungsbereichs des hochelastischen Kupplungselements (13) angeordnet ist.
